# EUROPEAN PATENT APPLICATION

(11) **EP 3 979 137 A1**
(43) Date of publication of application: **06.04.2022**
(21) Application number: 20814672.0
(22) Date of filing: 09.03.2020
(51) Int. Cl.: G06N 3/02, G06N 20/00

(54) **ARTIFICIAL INTELLIGENCE DEVICE AND PROGRAM MANUFACTURING METHOD**

(30) Priority: 27.05.2019 JP 2019098587
(71) Applicant: Sony Group Corporation, Tokyo 108-0075 (JP)
(72) Inventor: SPRANGER, Michael, Tokyo 108-0075 (JP); NUMAOKA, Chisato, Tokyo 108-0075 (JP)
(74) Representative: 2SPL Patentanwälte PartG mbB
(86) International application number: PCT/JP2020/010112
(87) International publication number: WO 2020/240981

(57) **Abstract**

Provided is an artificial intelligence device that verifies an artificial intelligence function such that a device having the artificial intelligence function generates appropriate output data on the basis of predetermined specifications. The artificial intelligence device includes: an obtaining unit that obtains input data for an artificial intelligence function from a predetermined storage device; a verifying unit that verifies the obtained input data on the basis of a predetermined criterion; an input unit that inputs input data satisfying the criterion into the artificial intelligence function; and a presenting unit that presents input data not satisfying the criterion and a criterion violated by the input data. The information processing apparatus further includes a processing unit that performs processing when the input data does not satisfy the criterion data.

## Description

### [Technical Field]

A technique disclosed in the present specification relates to an artificial intelligence device and a program creation method pertaining to an artificial intelligence function.

### [Background Art]

Recent years have seen growing expectations for artificial intelligence technologies that allow computers to perform various intelligent behaviors normally performed by humans, such as understanding languages, reasoning, and the like. Artificial intelligence functions are being applied in a wide range of technical fields, such as image recognition by cameras, image composition in televisions, voice recognition in headphones, natural language understanding and document composition in document processing systems, and behavior recognition and behavior generation in agents and robots. As artificial intelligence functions become more widespread, techniques for improving the reliability of devices having artificial intelligence functions, techniques for developing artificial intelligence modules that can respond to the values of organizations, and the like are becoming widespread as well.

For example, a proposal has been made for a method of developing an artificial intelligence module that itself selects an artificial intelligence module (a neural network or the like) adapted to an analysis objective and generates a highly-reliable artificial intelligence module through automatic learning (see PTL 1).

In addition, a proposal has been made for a technique that analyzes, learns, and predicts values and senses of values that differ and continually change for each individual and organization/group to which the individual belongs, and implement functions necessary for artificial intelligence to provide information and make proposals that match those values and senses of values (see PTL 2).

### [Citation List]

### [Patent Literature]

[PTL 1]
   JP 2019-12555 A
[PTL 2] JP 2014-182483 A

### [Summary]

### [Technical Problem]

As mentioned above, the development of a device having an artificial intelligence function is equivalent to the development of an artificial intelligence program that is suited to the criteria of a unique problem, such as reliability or a sense of values, and is essentially different from verifying a device provided with an artificial intelligence function against predetermined criteria and proposing a solution to retrain the artificial intelligence function.

Using techniques related to training methods such as deep learning using convolutional neural networks, it is possible to process large amounts of data instantly and automatically classify data, learn, and train using features hidden in the extracted data. Note that in the following, the term "training" will be used as a collective term for classification, learning, and training.

For example, by feeding a large amount of training data to an artificial intelligence function that distinguishes between cats and dogs and performing deep learning, it is possible to train the function to provide functions that are required, and develop a device having an artificial intelligence function that operates according to the trained model. Through training methods such as deep learning, it is possible to develop devices having artificial intelligence functions that can extract features unforeseeable to the developer from a large amount of data, and solve complex problems for which the developer could not envision an algorithm. In other words, deep learning has many advantages.

On the other hand, a device having an artificial intelligence function that operates using a trained model may output inference results that, due to a less-than-favorable analogy, equate human faces with animal faces, for example. In such cases, the artificial intelligence function may create social problems by demonstrating ethically problematic behavior.

It is difficult to completely solve the problem of artificial intelligence functions demonstrating undesirable behavior. However, it is possible to verify whether or not the artificial intelligence function can at least provide processing according to predetermined specifications. The applicant believes that it is desirable to modify the processing of an artificial intelligence function as appropriate when processing that violates predetermined specifications is detected.

Accordingly, an object of the technique disclosed in the present specification is to provide an artificial intelligence device that verifies an artificial intelligence function and trains the artificial intelligence function such that a device having an artificial intelligence function generates appropriate output data in light of predetermined criteria, and a program creation method that creates a computer program including a trained artificial intelligence function by training the artificial intelligence function.

### [Solution to Problem]

The disclosure of the present specification has been made in light of the above problems, and a first aspect thereof is an artificial intelligence device including: an input data obtaining unit that obtains input data for an artificial intelligence function from a predetermined storage device; an input data verifying unit that verifies the obtained input data on the basis of a predetermined criterion; a data input unit that inputs input data satisfying the criterion into the artificial intelligence function; and a presenting unit that presents input data not satisfying the criterion and a criterion violated by the input data.

The artificial intelligence device according to the first aspect further includes a processing unit that performs processing when the input data does not satisfy the criterion. The processing unit executes at least one of removing data not satisfying the criterion from the storage device or saving the data not satisfying the criterion in a storage device different from the storage device.

The artificial intelligence device according to the first aspect further includes an output data obtaining unit that obtains output data from the artificial intelligence function, and an output data verifying unit that verifies the obtained output data on the basis of a predetermined output criterion. The output data verifying unit verifies the output data on the basis of the output criterion that verifies fairness. When the output data does not satisfy the output criterion, the output data verifying unit further verifies whether or not the output data is within a normal range and the behavior of the artificial intelligence function is valid.

Additionally, a second aspect of the technique disclosed in the present specification is a program creation method that creates a computer program including an artificial intelligence function trained by training the artificial intelligence function. The method includes: obtaining input data for an artificial intelligence function from a predetermined storage device; verifying the obtained input data on the basis of a predetermined criterion; inputting input data satisfying the criterion into the artificial intelligence function; and presenting input data not satisfying the criterion and a criterion violated by the input data.

### [Advantageous Effects of Invention]

According to the technique disclosed in the present specification, it is possible to provide an artificial intelligence device and a program creation method that verify an artificial intelligence function such that a device having the artificial intelligence function generates appropriate output data on the basis of predetermined specifications.

According to the technique disclosed in the present specification, it is possible to provide an artificial intelligence device that verifies an artificial intelligence function and trains the artificial intelligence function such that a device having an artificial intelligence function generates appropriate output data in light of predetermined criteria, and a program creation method that creates a computer program including a trained artificial intelligence function by training the artificial intelligence function, without the device having the artificial intelligence function generating output data which a developer could not foresee and creating unforeseeable social problems.

Meanwhile, the effects described in the present specification are merely illustrative and effects provided by the technology disclosed in the present specification are not limited thereto. In addition, the technology disclosed in the present specification may further obtain additional effects in addition to the aforementioned effects.

Other objects, features, and advantages of the technology disclosed in the present specification will become clear according to detailed description based on embodiments which will be described later and the attached drawings.

### [Brief Description of Drawings]

[Fig. 1]

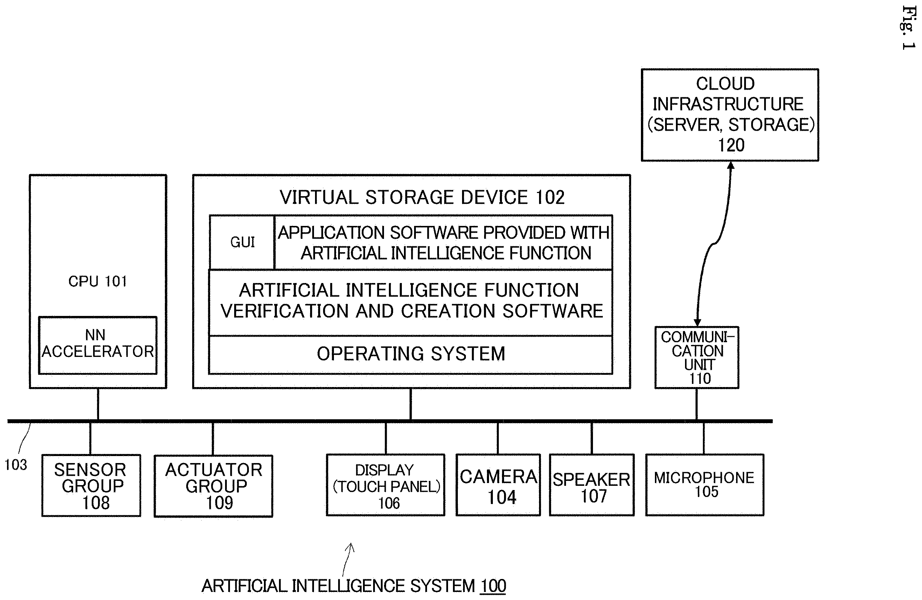

   Fig. 1 is a diagram illustrating an example of the hardware configuration of an artificial intelligence system 100.
[Fig. 2]

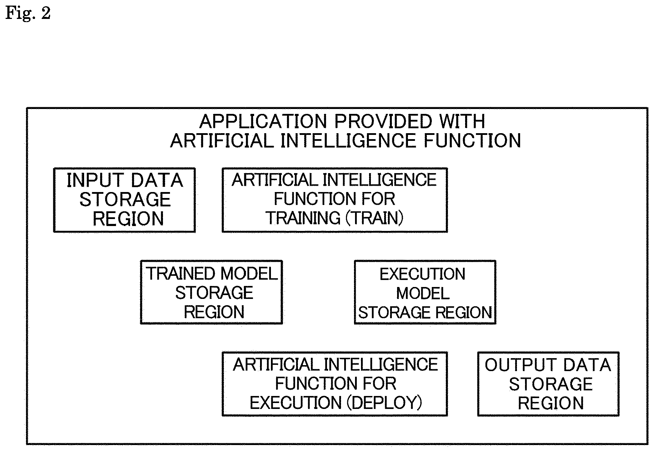

   Fig. 2 is a diagram illustrating an example of the configurations of application software provided with an artificial intelligence function.
[Fig. 3]

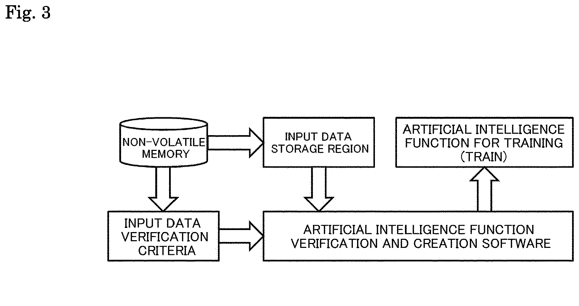

   Fig. 3 is a diagram illustrating a state of operation of a program and data that verify input data when training a model using an artificial intelligence function for training.
[Fig. 4]

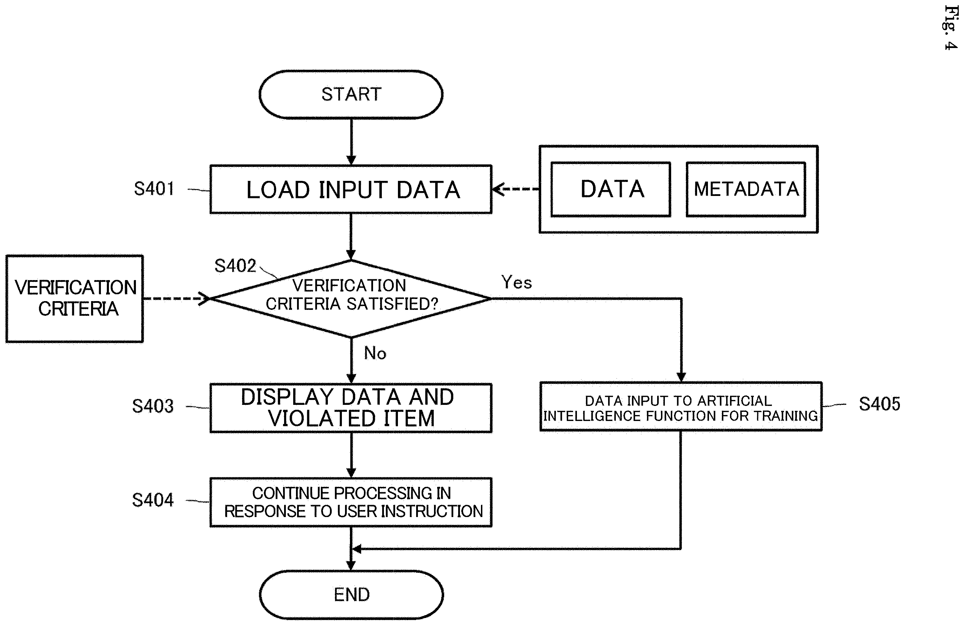

   Fig. 4 is a flowchart illustrating a processing sequence performed by artificial intelligence function verification and creation software.
[Fig. 5]

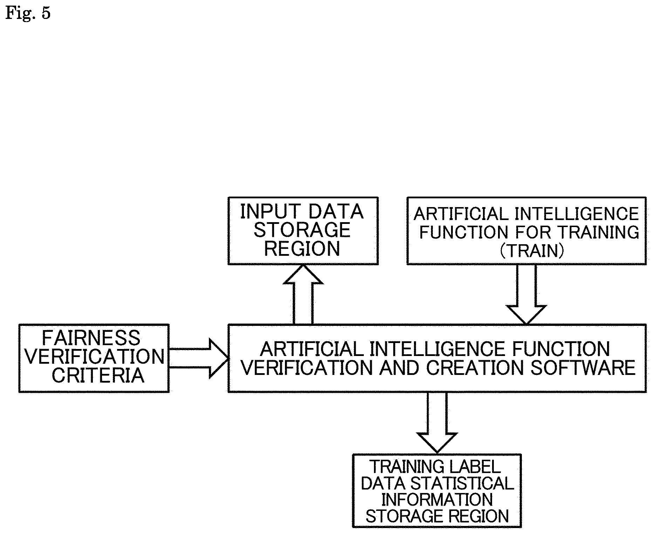

   Fig. 5 is a diagram illustrating a state of operation of a program and data that verify the fairness of trained data when training a model using an artificial intelligence function for training.
[Fig. 6]

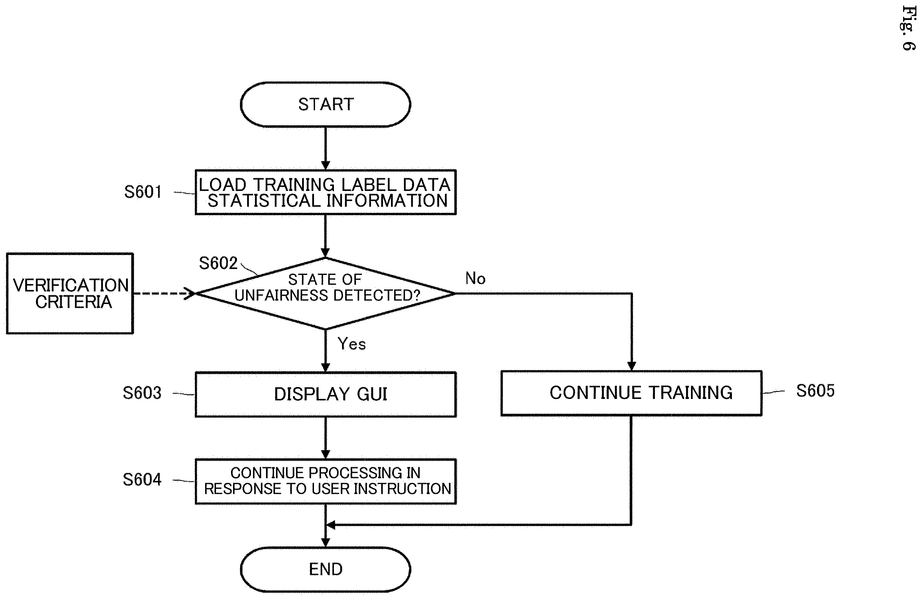

   Fig. 6 is a flowchart illustrating a processing sequence performed by artificial intelligence function verification and creation software when training a model using the artificial intelligence function for training.
[Fig. 7]

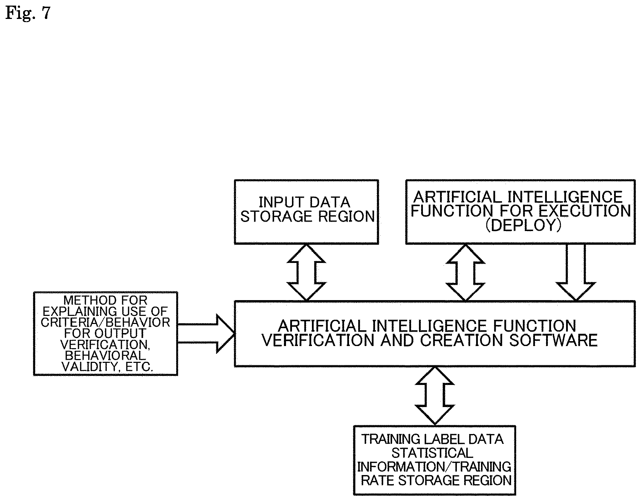

   Fig. 7 is a diagram illustrating a state of operation of a program and data that perform processes such as training rate testing, data generation, and inference using a trained model.
[Fig. 8]

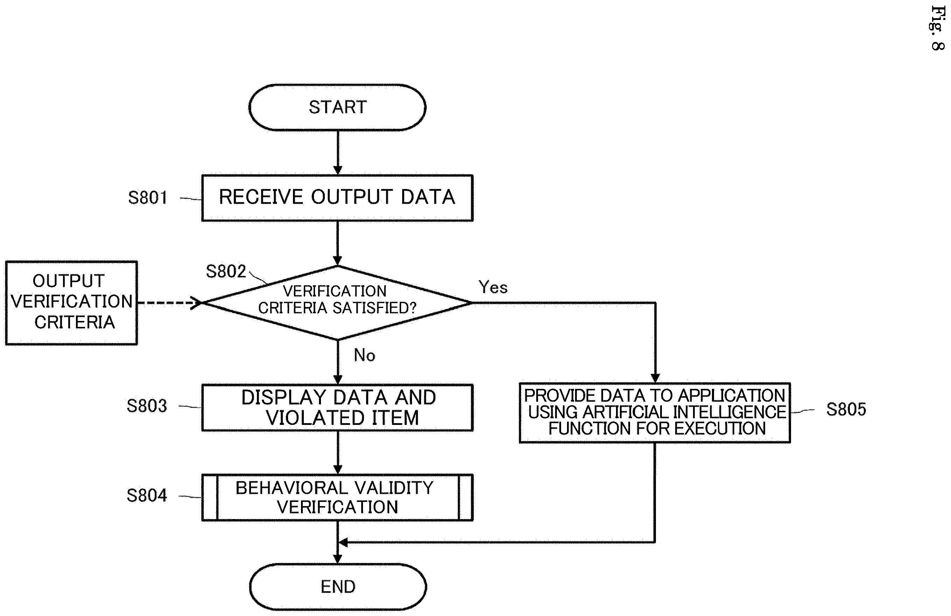

   Fig. 8 is a flowchart illustrating a processing sequence for determining verification criteria of the output data of the artificial intelligence function for training.
[Fig. 9]

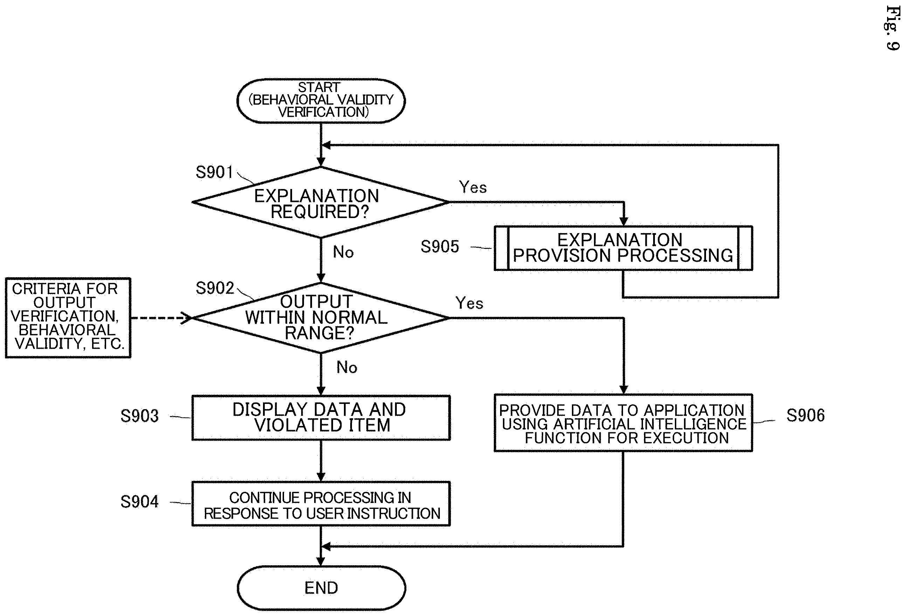

   Fig. 9 is a flowchart illustrating a processing sequence for verifying the behavioral validity of the artificial intelligence function for training.
[Fig. 10]

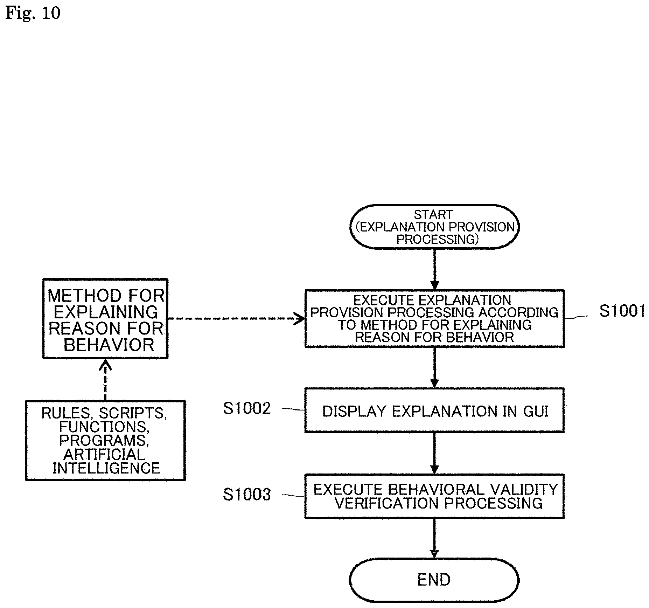

   Fig. 10 is a flowchart illustrating, in detail, a sequence in explanation provision processing.
[Fig. 11]

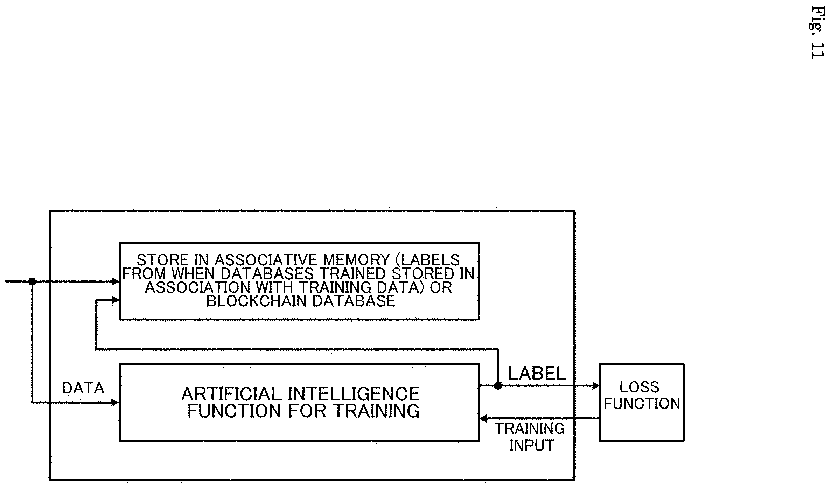

   Fig. 11 is a diagram illustrating an example of preparation processing performed during the training of an artificial intelligence function in order to provide an explanation of the behavioral validity of the artificial intelligence function for training.
[Fig. 12]

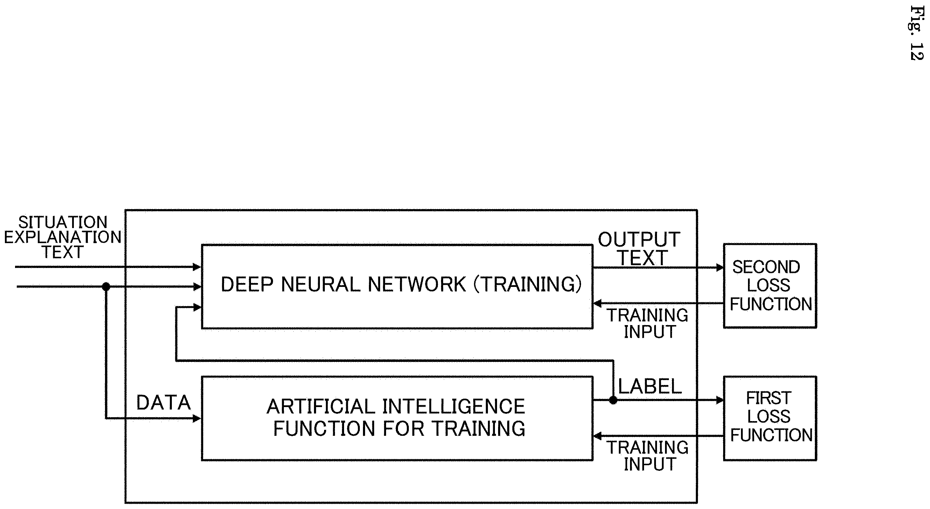

   Fig. 12 is a diagram illustrating an example of preparation processing performed during the training of an artificial intelligence function in order to provide an explanation of the behavioral validity of the artificial intelligence function for training.
[Fig. 13]

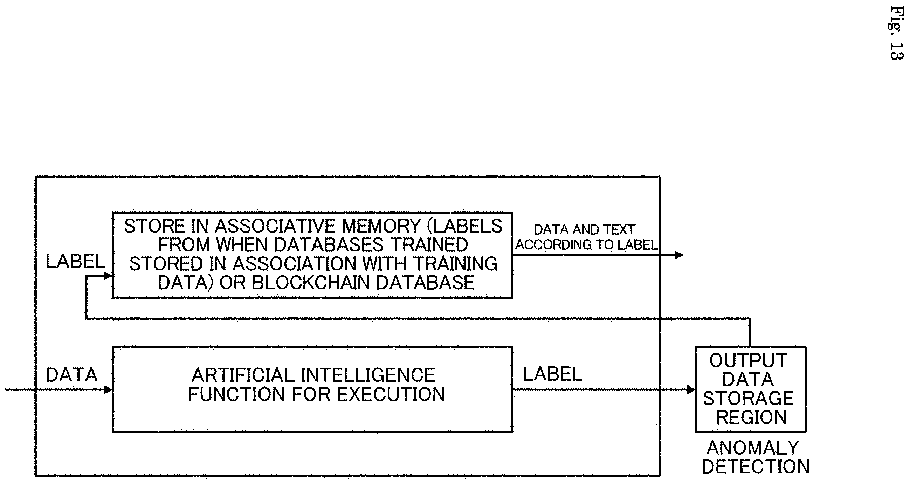

   Fig. 13 is a diagram illustrating an example of a configuration that implements processing of generating an explanation of a reason for operations of the artificial intelligence function for training.
[Fig. 14]

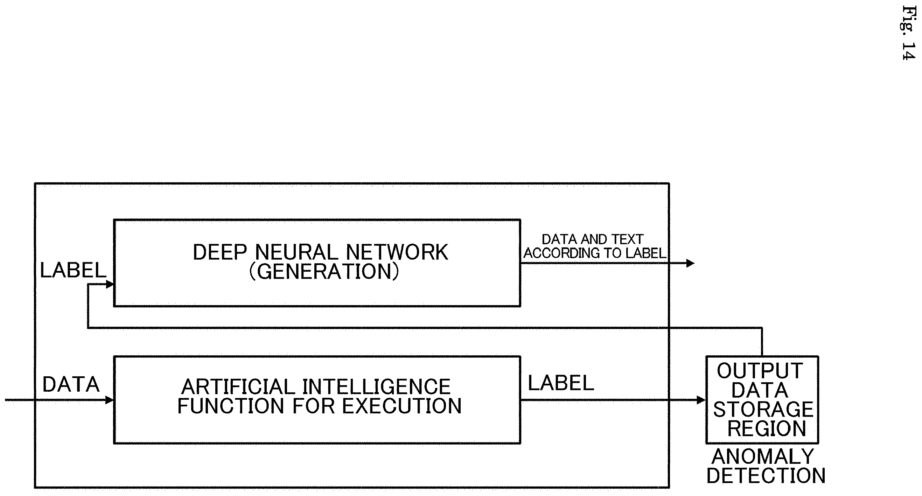

   Fig. 14 is a diagram illustrating an example of a configuration that implements processing of generating an explanation of a reason for operations of the artificial intelligence function for training.
[Fig. 15]

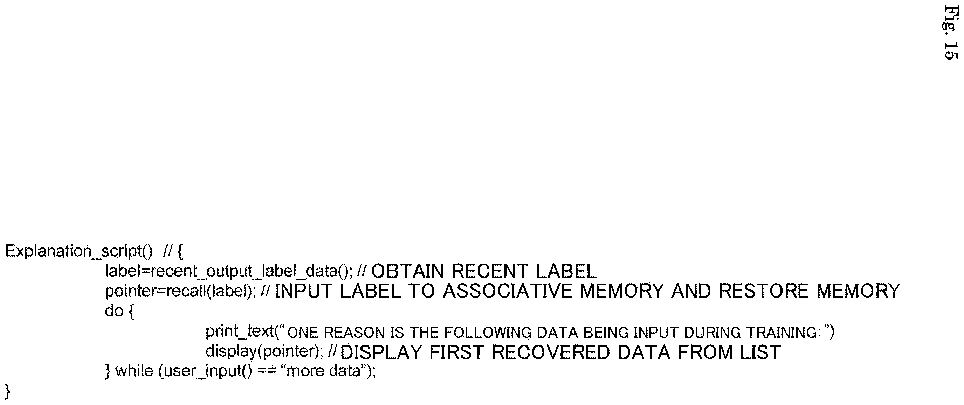

   Fig. 15 is a diagram illustrating a pseudo-program that represents the processing illustrated in Fig. 13.
[Fig. 16]

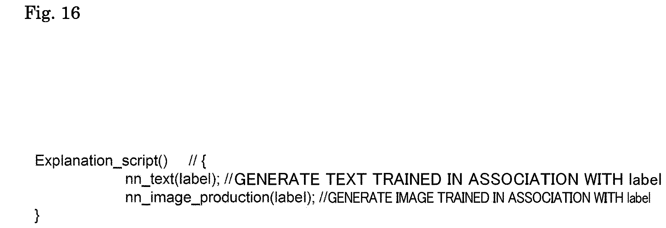

   Fig. 16 is a diagram illustrating a pseudo-program that represents the processing illustrated in Fig. 14.
[Fig. 17]

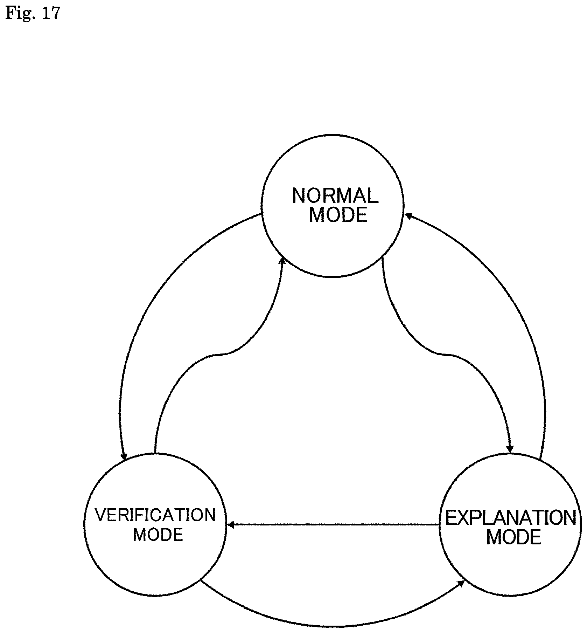

   Fig. 17 is a diagram illustrating state transitions of the artificial intelligence function verification and creation software.
[Fig. 18]

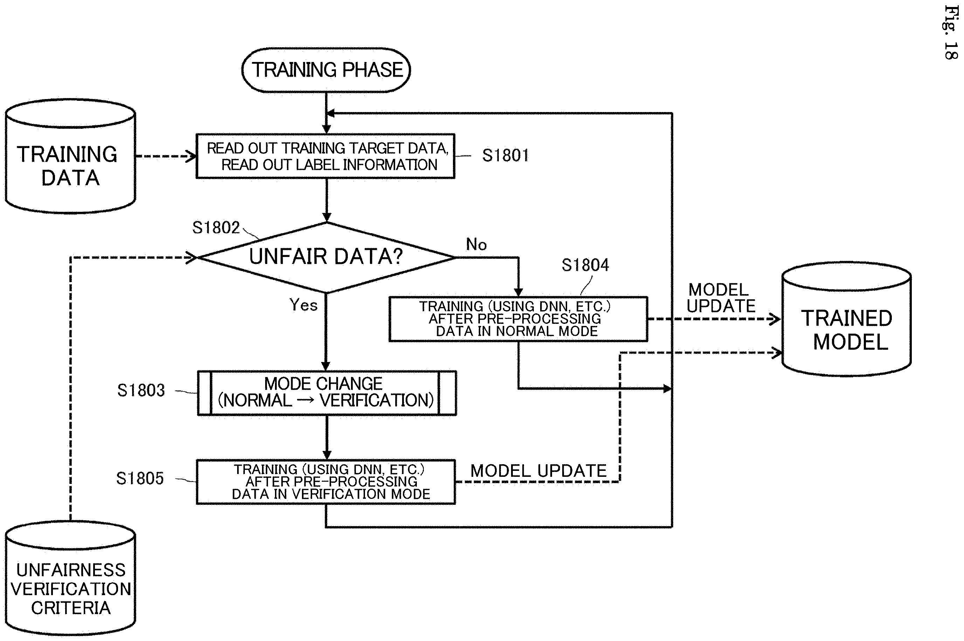

   Fig. 18 is a flowchart illustrating a processing sequence (training phase) for eliminating unfairness when modifying a trained model.
[Fig. 19]

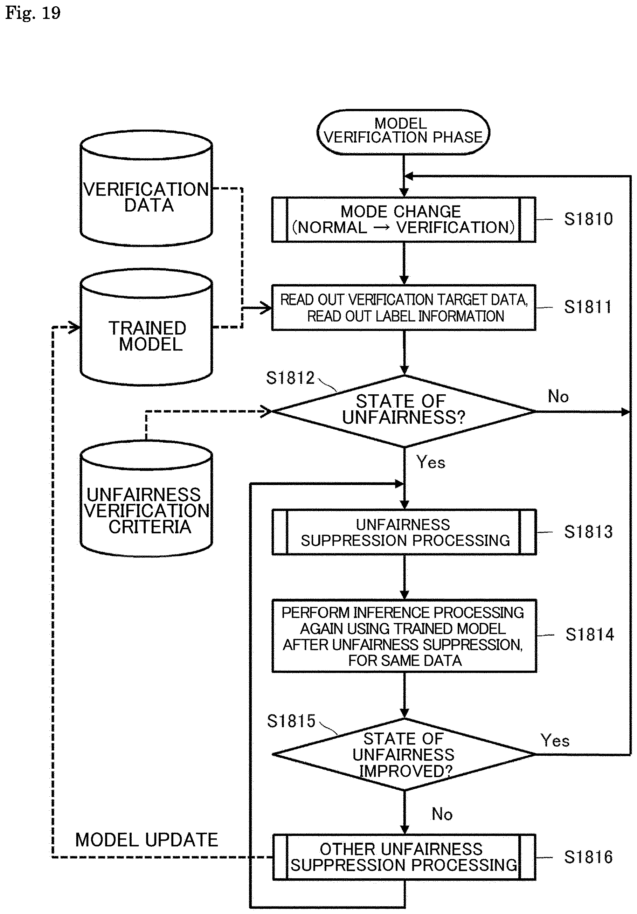

   Fig. 19 is a flowchart illustrating a processing sequence (model verification phase) for eliminating unfairness when modifying a trained model.
[Fig. 20]

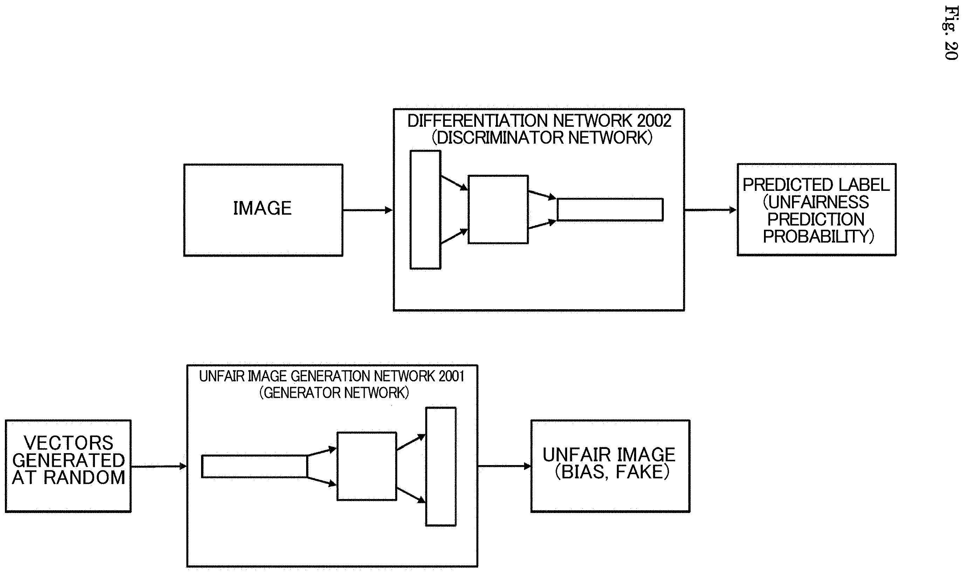

   Fig. 20 is a diagram illustrating a mechanism through which a generative adversarial network is used to recognize unfairness in a model.
[Fig. 21]

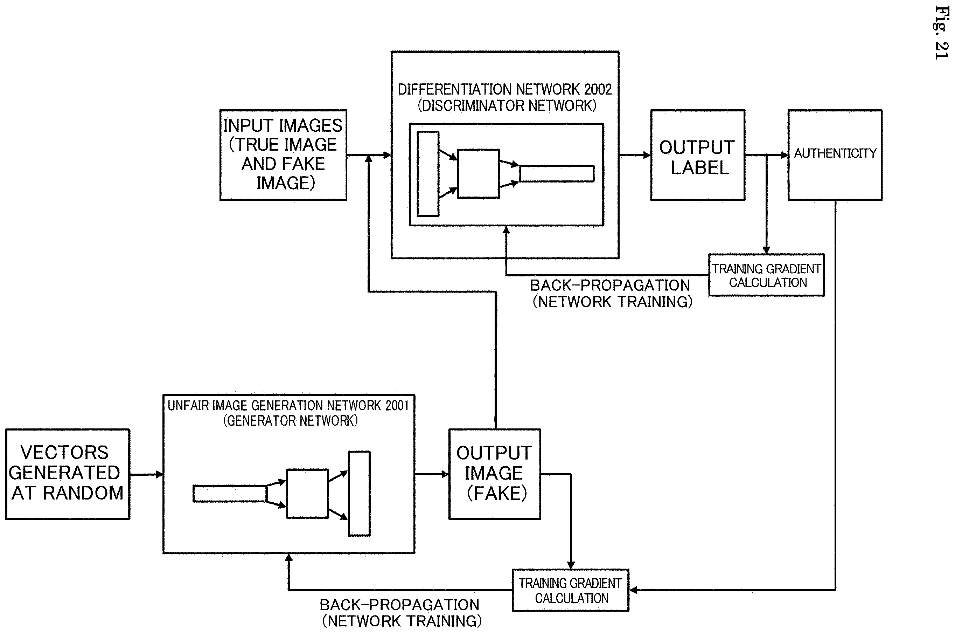

   Fig. 21 is a diagram illustrating an example of a system configuration used during training of a generative adversarial network.
[Fig. 22]

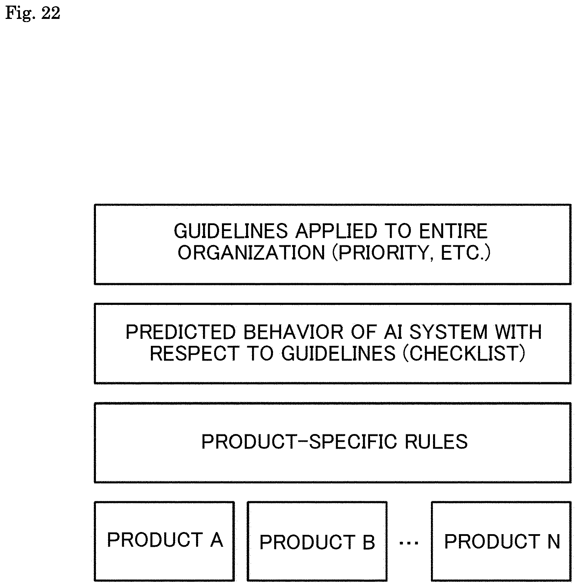

   Fig. 22 is a diagram illustrating an example of guidelines (criteria) and selectable rules.
[Fig. 23]

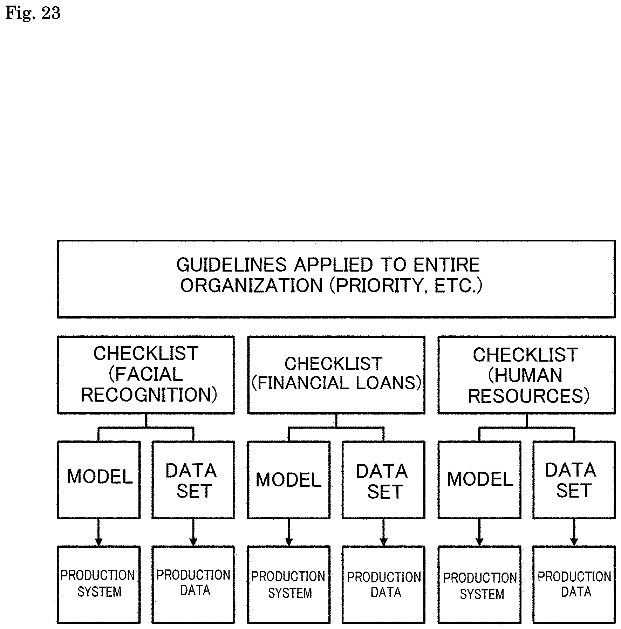

   Fig. 23 is a diagram illustrating another example (the data structure) of guidelines (criteria) and selectable rules.
[Fig. 24]

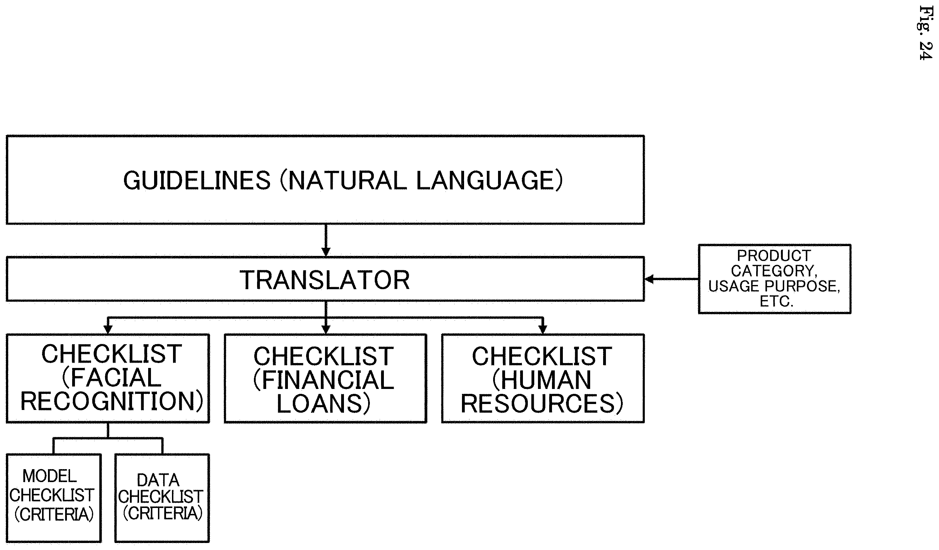

   Fig. 24 is a diagram illustrating a mechanism for automatically generating an executable checklist from guidelines.
[Fig. 25]

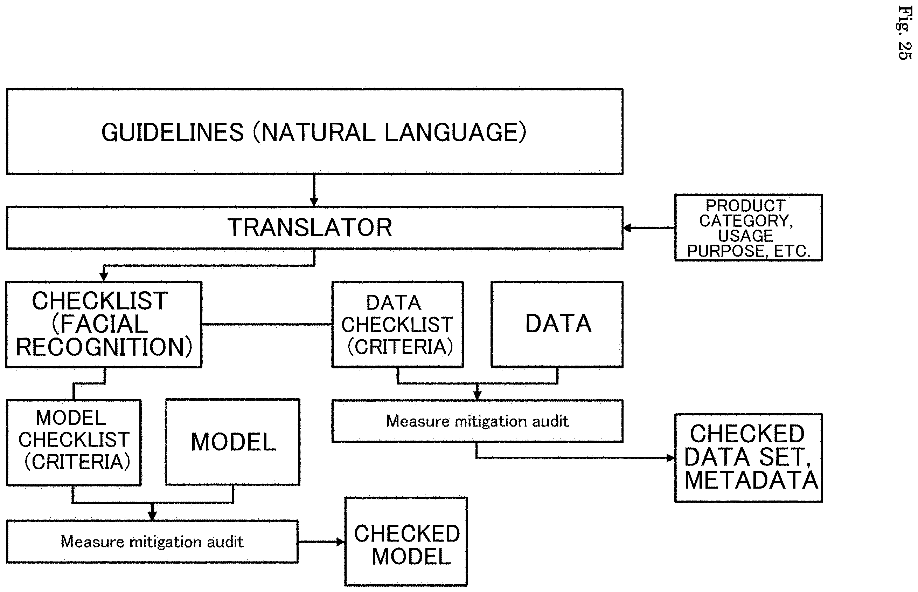

   Fig. 25 is a diagram illustrating a checklist (criteria) generated from guidelines.
[Fig. 26]

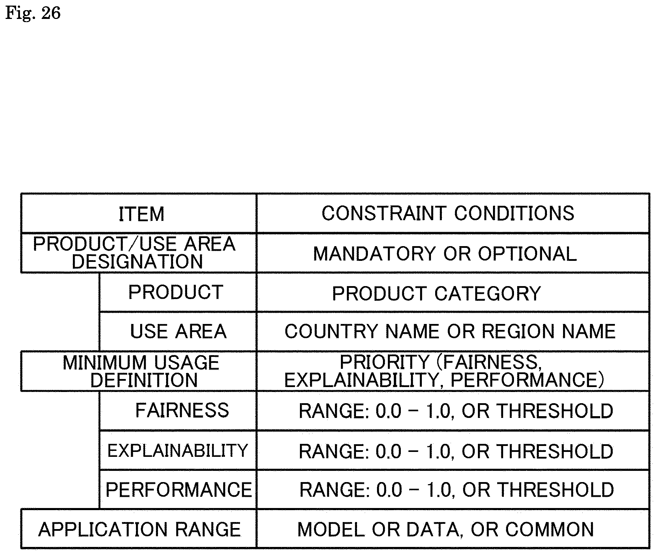

   Fig. 26 is a diagram illustrating an example of the data structure of a checklist template.
[Fig. 27]

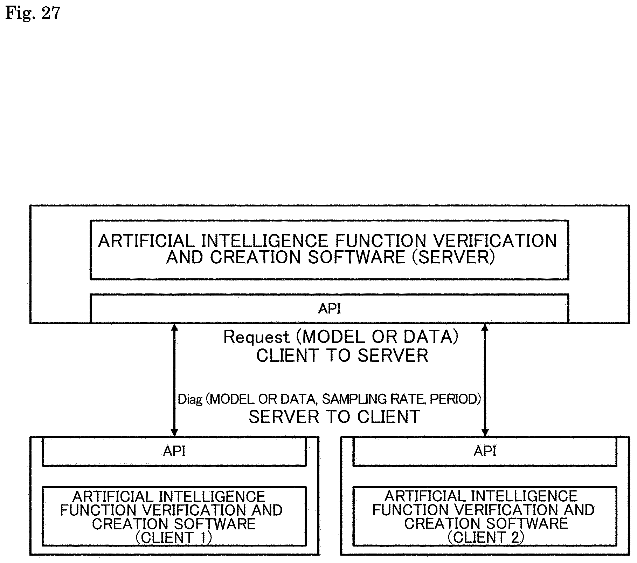

   Fig. 27 is a diagram illustrating a system for achieving conformance verification of guidelines.
[Fig. 28]

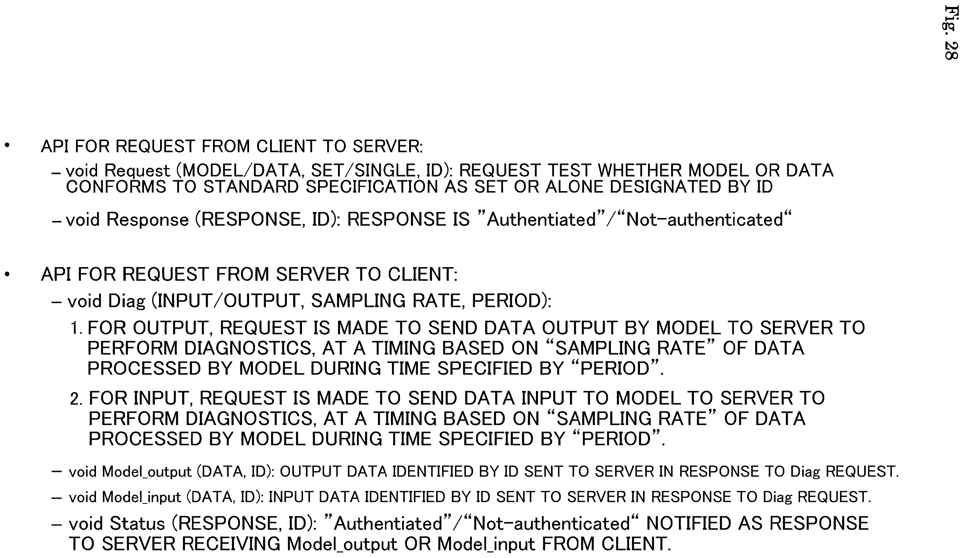

   Fig. 28 is a diagram illustrating an example of an API used between a server in the cloud and a client application.

### [Description of Embodiments]

Hereinafter, embodiments of a technique disclosed in the present specification will be described in detail with reference to the drawings.

### A. Basic Functions

The artificial intelligence function proposed in the present specification has three basic functions, namely "accountability", "fairness", and "transparency". Each basic function will be described hereinafter.

### (1) Accountability

Accountability is a function that manipulates criteria for verifying whether the output of a device having a target artificial intelligence function is appropriate in light of predetermined specifications.

As "criteria" for verifying a device having a target artificial intelligence function, rules, policies, guidelines, specifications, and the like are clearly defined in a form that can be recognized visually from the outside through a user interface of an artificial intelligence device having a function for verifying a computer program having an artificial intelligence function and creating a computer program by training an artificial intelligence function. These criteria can then be used as functions to run the target artificial intelligence function to determine conformance to the criteria.

Here, "criteria" includes restrictions on the objective for which the target artificial intelligence function operates, restrictions on the target user and region, and the like. "Criteria" also includes expressions of moral perspectives or social norms. Preferably, the "criteria" are provided such that a user can select from a set of multiple "criteria" as appropriate for the objective, and each criterion includes multiple selectable configuration items, with options for users requiring verification to change the selection of configuration items as appropriate in accordance with the content to be verified. The options include setting a priority for each item.

It is necessary for the user interface of the device that verifies the artificial intelligence function to be configured such that the user can confirm what kind of behavior the device having the target artificial intelligence function is performing with respect to the criteria. If the device having the target artificial intelligence function detects an unintended use of the artificial intelligence function or the like by verifying the output of the artificial intelligence function against the "criteria", the user can control the operation of the artificial intelligence function (stopping some or all functions or the like) through the user interface of the device verifying the artificial intelligence function.

The criteria can include, for example, items that specify a technical field as the application of the target artificial intelligence function. Technical fields include biological research, general-purpose voice agents, and the like.

### (2) Fairness

Fairness is a function necessitated by the fact that the device having the target artificial intelligence function should treat all people fairly. Specifically, there is demand to ensure fairness in the criteria for extracting the characteristics of data input when training the artificial intelligence function, in the criteria pertaining to the characteristics of the data output from the device having the target artificial intelligence function, and the like. Here, being fair means, in one aspect, that there is no bias toward data with specific characteristics (i.e., unbiased).

If there is bias in the characteristics of the input data used to train the artificial intelligence function, a model trained by the artificial intelligence function will have bias as well. In other words, in an input-output relationship, the percentage of a predetermined output for a specific input is likely to be biased with respect to the percentage of a different output.

Even though it is not possible to completely eliminate bias, the applicant believes that it is possible to confirm the existence of bias through a device and the like that verify artificial intelligence functions, and that there is a need for functions and user interfaces for controlling bias from the user's viewpoint to the greatest extent possible. In addition, if bias that the user considers undesirable is detected for a predetermined input, it is necessary to have a function that allows the user to correct the bias through such a user interface.

In another aspect, fairness means that specific data are true. Input data for training being fake is undesirable because the model will be trained so that the artificial intelligence function recognizes fake items as real. Even though it is not possible to completely eliminate fakes, the applicant believes that it is possible to confirm the existence of fakes through a device and the like that verify artificial intelligence functions, and that there is a need for functions and user interfaces for controlling fakes from the user's viewpoint to the greatest extent possible. Furthermore, it is desirable that the device that verifies the artificial intelligence function be capable of controlling the operation of the artificial intelligence function (stopping some or all functions or the like) through the user interface or the like when a state in which fairness cannot be ensured in the target artificial intelligence function is recognized.

Bias may also be controlled according to the objective or field in which the artificial intelligence function is applied. For example, if the criteria suggest that the function is intended for biological research, the function can be configured to allow for a wide range of biases with respect to race. On the other hand, if the criteria suggest that the function is intended for voice agents used in the home, the function can be configured to eliminate as much bias (i.e., prejudice) as possible with respect to race. As another example, if the artificial intelligence function is applied for the purpose of automatically generating new video game characters, the criteria for determining whether or not training images are true can be loosened. On the other hand, if the function is applied for the purpose of determining whether or not a work on the Internet is fake, whether or not training images are true can be determined as strictly as possible. In this manner, when developing a system having an artificial intelligence function, a desired artificial intelligence device can be developed by having the user select the criteria.

### (3) Transparency

Transparency is a function that specifies input/output relationships of a device having a target artificial intelligence function. Transparency can also be described as a function of a device that verifies an artificial intelligence function for explaining and justifying to the user the decisions and actions (behaviors) a device having an artificial intelligence function makes with respect to the user.

A device that verifies an artificial intelligence function according to the present embodiment is configured to be capable of explaining and justifying, through a user interface or the like, the behavior of a device having an artificial intelligence function with respect to the "criteria" defined from the perspective of transparency as described above.

First, a device that verifies an artificial intelligence function can explain an "input-output relationship" (i.e., which input produced which output) of the target artificial intelligence function through a user interface or the like. In other words, a device that verifies an artificial intelligence function can provide appropriate reasons for the behavior of a black-boxed artificial intelligence function. For example, the input that produced a specific output can be identified by tracing backwards from the output.

Second, a device that verifies an artificial intelligence function can explain, through a user interface or the like, a reason why the target artificial intelligence function has generated such an "input-output relationship". In other words, a device that verifies an artificial intelligence function can not only simply identify the input from the output, but also identify the training data set that was used to generate the trained model used by the artificial intelligence function (the reason for the output) after training, and verify the relationship between the training data set and the output of the artificial intelligence function. A device that verifies an artificial intelligence function can identify the cause of a situation caused by a device having the target artificial intelligence function, and explain and justify the cause on the basis of the criteria. For example, the device that verifies the artificial intelligence function is capable of controlling the operation of the artificial intelligence function (stopping some or all functions or the like) through the user interface or the like when the behavior of the device having the target artificial intelligence function is determined to be unjustifiable.

### B. Example of Configuration of Artificial Intelligence System

An example of the configuration of an artificial intelligence system will be described next. Fig. 1 schematically illustrates an example of the hardware configuration of an artificial intelligence system 100 according to the present embodiment. Here, part of the configuration of the artificial intelligence system 100 or all of the configuration aside from cloud infrastructure may be configured as a single artificial intelligence device (e.g., a robot, a computer device, or the like).

The artificial intelligence system 100 illustrated in the drawing includes a CPU (Central Processing Unit) 101 that comprehensively controls the system as a whole, and a virtual storage device 102 used by the CPU 101. In the present embodiment, the CPU 101 is assumed to be equipped with a neural network (NN) accelerator. The virtual storage device 102 is a concept that includes a primary storage device as local memory of the CPU 101, cache memory, and a secondary storage device constituted by a large-capacity external storage device such as a hard disk device (hard disc drive, or HDD). An operating system (OS) and a plurality of software running under an execution environment provided by the OS (or executed by the CPU 101) are provided in the virtual storage device 102.

In addition, various sensors and actuators are interconnected with the CPU 101 and the virtual storage device 102 by a bus 103. Sensor data obtained by each sensor is captured in the virtual storage device 102 and processed as appropriate by the software executed by the CPU 101. Each actuator is driven on the basis of commands from the CPU 101 (or results of executing software).

In the example illustrated in Fig. 1, the artificial intelligence system 100 includes a camera 104 and a microphone 105 as sensors. The camera 104 is constituted by an image sensor such as, for example, a CMOS (Complementary Metal Oxyde Semiconductor) or a CCD (Charge Coupled Device). The camera 104 may be a stereoscopic camera using two or more image sensors. The microphone 105 may be a microphone array using two or more sound collection elements.

The artificial intelligence system 100 also includes a display 106 and a speaker 107 as actuators. The display 106 is constituted by a liquid crystal display, an organic EL (Electro-Luminescence) display, or the like. The display 106 may be a touch screen display having a touch panel overlaid on the screen. However, the touch panel can be classified as a sensor rather than an actuator. Additionally, the speaker 107 may be a speaker array (a multi-channel speaker or a super-multi-channel speaker) configured as a combination of a plurality of speakers. The speaker array may include an "acoustic surface" that performs audio output by vibrating a screen of the display 106 using one or more exciters (actuators) that produce vibrations.

The artificial intelligence system 100 further includes another sensor group 108 and another actuator group 109. The sensor group 108 may include common input devices such as a keyboard and a mouse. The sensor group 108 may include various biometric sensors that sense the biometric information of a user using the artificial intelligence function, and various environmental sensors that sense the environment in which the artificial intelligence function is used.

The present embodiment assumes that artificial intelligence function verification and creation software, application software provided with the artificial intelligence function, and a GUI (Graphical UI) that provides the user interface are installed in the virtual storage device 102. These software are loaded into the virtual storage device 102 by the OS and executed by the CPU 101 when the artificial intelligence system 100 is operating.

For example, when running on the CPU 101, the application software provided with the artificial intelligence function indirectly accesses OS functions through a set of application programming interfaces (APIs) provided in the artificial intelligence function verification and creation software. The application software provided with the artificial intelligence function is then created through training of the artificial intelligence function subject to verification by the artificial intelligence function verification and creation software.

Furthermore, the artificial intelligence system 100 can run a GUI on the virtual storage device 102, and the user can control the operation and input/output of the artificial intelligence function verification and creation software using a touch panel, keyboard, or voice input. The artificial intelligence system 100 also performs input and output operations using the camera 104, the microphone 105, the speaker 106, or the other sensor group 108 and the other actuator group 109 as required by the application software provided with the artificial intelligence function.

The artificial intelligence system 100 further includes a communication unit 110. The communication unit 110 has a wired communication function such as Ethernet (registered trademark) or the like or a wireless communication function such as Wi-Fi (registered trademark) or the like, and is further interconnected with cloud infrastructure 120 on an external network via a router (not shown). The cloud infrastructure 120 is constituted by a server device and storage. As will be described later, the artificial intelligence system 100 is equipped with APIs that exchange data with the cloud and request some or all of the processing related to the artificial intelligence function to be performed.

The artificial intelligence function verification and creation software runs on the artificial intelligence system 100 to create the artificial intelligence function to be included in the application software. In the process of creating the artificial intelligence function, the artificial intelligence function verification and creation software verifies the input data, training data, and the like for the artificial intelligence function, verifies the output data of the artificial intelligence function, and the like (described later). The application software provided with the artificial intelligence function, created by the artificial intelligence function verification and creation software, may run on the same artificial intelligence system 100, or may be loaded and used in another device.

Note that the device that runs the artificial intelligence function verification and creation software, and verifies and trains the artificial intelligence function, will also be called a "device that verifies the artificial intelligence function" in the present specification. Additionally, a device that runs an artificial intelligence function to be verified and trained by the device that verifies the artificial intelligence function will also be called a "device having the artificial intelligence function" in the present specification. A computer running the application software provided with the artificial intelligence function can also be called a "device having the artificial intelligence function".

Fig. 2 schematically illustrates an example of the configuration of the application software provided with the artificial intelligence function, loaded into the virtual storage device 102. In general, an application is constituted by a program and data. As a program for the application software provided with the artificial intelligence function, at least two types of functions are provided: an artificial intelligence function for training (train) and an artificial intelligence function for execution (deploy). These may be configured as distinctly different data and programs in a storage region, or common data and programs may be configured to be used through mode designation. An input data storage region, an output data storage region, and an execution model storage region can be given as storage regions for the work of an application having an artificial intelligence function. In addition, a trained model storage region is allocated, which is trained by the artificial intelligence function for training, output, and maintained over time. The execution model storage region is normally a copy of the trained model storage region, and is used by the artificial intelligence function for execution. When a mode is specified, this is a common storage region.

The artificial intelligence function for training and the artificial intelligence function for execution are both functions provided through machine learning, known as deep learning. Deep learning is implemented by a multilayer neural network (Deep Neural Network, or DNN). ADNN is effective for training image data, audio data represented as two-dimensional data of frequency and time, and the like. A DNN can be realized by combining various networks, such as Convolutional Neural Networks (CNNs), which are constituted by convolutional layers, pooling layers, and fully-connected layers; Recurrent Neural Networks (RNNs), which are applied to time series data training; and Autoencoders, which train abstract data through dimensional compression.

In the following, the basic functions of the artificial intelligence system 100 will be described while describing several examples of specific configurations and processing methods through which the artificial intelligence system 100 according to the present embodiment verifies and creates artificial intelligence functions using the artificial intelligence function verification and creation software.

### [Example 1]

An example of the artificial intelligence system 100 pertaining to data verification (learning data prior-verification) will be described here.

Fig. 3 illustrates an example of the operation of programs and data for input data verification on the basis of criteria when a model is trained using the artificial intelligence function for training of an application having an artificial intelligence function.

The artificial intelligence function verification and creation software can filter data using input data verification criteria before the data is input to the artificial intelligence function for training. Specifically, upon retrieving the input data and the input data verification criteria stored in non-volatile memory in the virtual storage device 102, the artificial intelligence function verification and creation software performs pre-processing to verify whether or not the input data meets the input data verification criteria, and determines whether or not to input the input data into the artificial intelligence function for training.

Fig. 4 illustrates, in flowchart format, a processing sequence performed by the artificial intelligence function verification and creation software when training a model using the artificial intelligence function for training (when the input data is filtered).

The artificial intelligence function verification and creation software first loads the input data (step S401). The input data may be image data, audio data, or the like that has been pre-processed for input to the artificial intelligence function for training. Metadata (attribute data) is also added to such input data. The metadata is, for example, added in association with the data when the data is obtained, and is the location where the data was obtained (e.g., GPS (Global Positioning System) data), data of objects included in the data (e.g., personal identification information such as nationality and race of a person in a photograph), and personal identification information of the data creator (sensitive information such as name, nationality, race, hobbies, and the like).

Next, the artificial intelligence function verification and creation software compares the input data loaded in step S401 with verification criteria (step S402). Although Fig. 4 illustrates the comparison with the verification criteria as a single determination step in order to simplify the descriptions, it is assumed that if there are multiple verification criteria, multiple determination steps are performed in order to compare the input data with each of the verification criteria in order. The verification criteria may be, for example, items to be checked, such as "is specific personal identification information data such as race included".

If the input data loaded in step S401 meets (all) the verification criteria (Yes in step S402), the artificial intelligence function verification and creation software inputs the input data and the metadata thereof to the artificial intelligence function for training, and performs the training (step S405).

On the other hand, if the input data loaded in step S401 does not satisfy (at least one of) the verification criteria (No in step S402), the artificial intelligence function verification and creation software displays the input data (and data identification information) together with the violated item (the item of the verification criteria that was violated) in the GUI (step S403), and prompts the user to decide what to do next. In step S403, data identification information that identifies the input data may be displayed in the GUI along with (or instead of) the input data that violates the verification criteria. The metadata of the input data may also be displayed in the GUI.

The user instructs what to do next via the GUI (or another input device). Then, the artificial intelligence function verification and creation software continues the processing on the basis of the instruction input from the user (step S404). Saving the displayed data to another storage device as violating data, deleting the violating data, and the like can be given as the processing instructed by the user.

The processing sequence illustrated in Fig. 4 (or the first example) has an effect of ensuring the effectiveness of accountability and supporting transparency in terms of input data by comparing and judging the input data with the verification criteria.

### [Example 2]

An example of the artificial intelligence system 100 pertaining to bias detection for training data in the training of an artificial intelligence function will be described next.

Fig. 5 illustrates an example of the operation of programs and data for verifying the fairness of trained data on the basis of criteria when a model is trained using the artificial intelligence function for training of an application having an artificial intelligence function.

The artificial intelligence function verification and creation software is configured to collect statistical data of output data labeled by the artificial intelligence function for training. This makes it possible to verify whether or not the trained data ensures fairness from the perspective of labels. The verification criteria can be selected in advance as criteria for verifying the fairness. If all labels are to be fair, "all clusters" may be selected. If it is sufficient to verify bias only for some labels, such as "race" and "nationality", then the corresponding clusters can be specified as fairness verification criteria. When focusing on the possibility of data being fake, a setting can be made to verify a label of "authenticity".

Fig. 6 illustrates, in flowchart format, a processing sequence performed by the artificial intelligence function verification and creation software when training a model using the artificial intelligence function for training (when detecting the unfairness of the output data). The processing of detecting unfairness may be executed at regular intervals, or may be executed in response to a user's instruction to "start processing". The user can instruct the start of processing in various ways, e.g., by selecting and manipulating a "start processing" button (a software button) displayed in the GUI using the touch panel, keyboard, or the like, by speaking the words "start processing" aloud, or the like.

The artificial intelligence function verification and creation software first loads training label data statistical information which is stored (step S601). Here, it is desirable that the statistical information be displayed as a graph in the user interface.

Next, the artificial intelligence function verification and creation software checks, in light of the verification criteria, whether or not an unfair state is detected for a specific label, i.e., whether there are data amount imbalances with respect to the number of label data, for an item to be verified, from a distribution in the training label data (step S602). Specific verification criteria can be given as the verification criteria, such as "whether there is data exceeding the average by more than 20%". Although Fig. 6 illustrates a single verification criterion as a single determination step in order to simplify the descriptions, it is assumed that if there are multiple verification criteria, multiple determination steps are performed in order to check the unfairness, in order for each verification criterion.

If the distribution of the training label data loaded in step S601 meets (all) the verification criteria (No in step S602), the artificial intelligence function verification and creation software allows the artificial intelligence function for training to continue training (step S605).

On the other hand, if a state is detected in which the distribution of the training label data loaded in step S601 does not meet (at least one of) the verification criteria (Yes in step S602), the artificial intelligence function verification and creation software updates the graph of the statistical information in the GUI, and displays the detected data label that is in an unfair state (e.g., a state with strong bias) (step S603), after which the user is prompted to decide what to do next.

The user can see the data label in an unfair state through the GUI. The user then instructs what to do next via the GUI (or another input device). The artificial intelligence function verification and creation software continues the processing on the basis of the instruction input from the user (step S604). Saving the data in which unfairness has been detected to another storage device and the like can be given as the processing instructed by the user. It is also possible to control the operation of the artificial intelligence function (e.g., stop some or all functions) through the user interface or the like.

The processing sequence illustrated in Fig. 6 (or the second example) has an effect of allowing the artificial intelligence function to be trained to have fairness using bias-free and fair training data.

### [Example 3]

An example of the artificial intelligence system 100 pertaining to run time data verification and AI behavior explanation provision using a trained model will be described next.

Fig. 7 illustrates an example of the operation of programs and data for performing processing such as training rate testing, data generation, and inference that use a trained model, using the artificial intelligence function for training of an application having an artificial intelligence function. In training rate testing, it is assumed that a training rate is measured by inputting test data different from the training data. Here, the artificial intelligence function verification and creation software verifies and provides explanations for the data output generated by the artificial intelligence function for training, while managing the data input/output of the artificial intelligence function for execution.

An artificial intelligence function may be constituted by a combination of multiple artificial intelligence functions (e.g., by function, such as for facial recognition or voice recognition, or by purpose/application, such as for gaming or surveillance). In such a case, the training rate is measured using test data as described above for each individual artificial intelligence function. Then, for an artificial intelligence function whose measurement results do not meet predetermined conditions, the training can be restarted again as an artificial intelligence function for training. The conditions in this case can be given as criteria, such as the validity of operations. For example, a criterion such as "a training rate of at least 98%" can be provided.

When verifying and providing explanations for output data, the artificial intelligence function verification and creation software loads the criteria for output verification, validity of behavior, and the like, and a method for explaining why a behavior has occurred, into memory from an external database or by communicating with the external database. Here, the method for explaining why a behavior has occurred may be provided as a program.

Fig. 8 illustrates, in flowchart format, a processing sequence for determining the verification criteria for the output data of the artificial intelligence function for training by the artificial intelligence function verification and creation software in the artificial intelligence system 100.

First, when the artificial intelligence function verification and creation software receives the output data of the artificial intelligence function for training (step S801), the software checks whether or not the output data meets the verification criteria (step S802). At this time, the verification criteria is read out from a predetermined storage region and the determination is made.

If the output data received in step S801 meets the verification criteria (Yes in step S802), the artificial intelligence function verification and creation software provides the output data to an application using the artificial intelligence function for execution so that the application can perform inference and the like (step S805).

On the other hand, if the output data received in step S801 does not meet the verification criteria (No in step S802), the artificial intelligence function verification and creation software displays the data (and identifier information that enables the data to be obtained) via the GUI (such as the display 106) of the artificial intelligence system 100, along with the item defined as a violation in light of the criteria (step S803). The identifier information that can be used to obtain data may be, for example, a URI (Universal Resource Identifier) that specifies the location of the data. Furthermore, the artificial intelligence function verification and creation software performs the processing of verifying the behavioral validity of the artificial intelligence function for training according to user commands made through the GUI (step S804).

Fig. 9 illustrates, in flowchart format, a processing sequence for verifying the behavioral validity of the artificial intelligence function for training executed in step S804 in the flowchart illustrated in Fig. 8.

The artificial intelligence function verification and creation software first determines whether or not it is necessary to provide an explanation of the situation (step S901).

For example, the artificial intelligence system 100 may provide a user interface for the user to operate to select whether or not the user requires the artificial intelligence system 100 to provide an explanation. The user interface may be a software button using the GUI or the touch panel, a keyboard operation, voice recognition of a voice command made by the user, or the like. Based on the user's selection, an explanation provision flag can be set to indicate the need for an explanation. If the explanation provision flag is 1, it is determined that it is necessary to provide an explanation, whereas if the explanation provision flag is 0, it is determined that it is not necessary to provide an explanation.

If it is necessary to provide an explanation (Yes in step S901), the artificial intelligence function verification and creation software performs explanation provision processing (step S905). Fig. 10 illustrates a sequence for the explanation provision processing, but the details thereof will be given later. After the explanation provision processing ends, the sequence returns to step S901.

If it is not necessary to provide an explanation (No in step S901), the artificial intelligence function verification and creation software then determines whether or not the data (label) output from the artificial intelligence function for training is in a normal range and in a behavior invalid range (step S902). At this time, the criteria for verifying the output data and examining the validity of the behavior are read out from a predetermined storage region, and the determination processing is performed.

If the output data of the artificial intelligence function for training meets the verification criteria and the behavior is in a valid range (Yes in step S902), the artificial intelligence function verification and creation software provides the output data to an application using the artificial intelligence function for execution so that the application can perform inference and the like (step S906).

On the other hand, if it is determined that the output data of the artificial intelligence function for training does not meet the verification criteria (No in step S902), the artificial intelligence function verification and creation software displays the data (and identifier information that enables the data to be obtained) via the GUI (such as the display 106) of the artificial intelligence system 100, along with the item defined as a violation in light of the criteria (step S903). The identifier information that can be used to obtain data may be, for example, a URI that specifies the location of the data. Furthermore, the artificial intelligence function verification and creation software continues the processing of verifying the behavioral validity of the artificial intelligence function for training according to user commands made through the GUI (step S904).

Fig. 10 illustrates, in flowchart format, a specific sequence of the explanation provision processing performed in step S905 of the flowchart illustrated in Fig. 9.

The artificial intelligence function verification and creation software runs processing on a processor (CPU 101) according to a method defined as the method of explaining the reason for the behavior of the artificial intelligence function for training (step S1001).The method for explanation can be selected from rules, scripts, functions, programs, or artificial intelligence techniques such as deep neural networks.

The results of the explanation are displayed via the GUI of the artificial intelligence system 100 (the display 106 or the like) (step S1002). The artificial intelligence function verification and creation software then continues the processing of verifying the behavioral validity of the artificial intelligence function for training according to user commands made through the GUI (step S1003).

Fig. 11 and Fig. 12 illustrate examples of preparation processing performed by the artificial intelligence system 100 according to the processing sequence illustrated in Fig. 10 during the training of an artificial intelligence function in order to provide an explanation of the behavioral validity of the artificial intelligence function for training.

Fig. 11 illustrates a method, when training the artificial intelligence function for training, for storing labels and data generated by the artificial intelligence function in association with each other in associative memory, or a method for storing the labels and data in a distributed manner on a network using blockchain technology instead of associative memory. In the configuration illustrated here, as one method of training the artificial intelligence function for training in the artificial intelligence system 100, the output label of the artificial intelligence function for training and a desired label (not shown) are taken as inputs, and using a result calculated using a loss function, training input is generated for training the artificial intelligence function for training (in the case of a neural network, changing the weights that constitute the network).

Additionally, Fig. 12 illustrates an example of a device configuration that uses a deep neural network instead of associative memory to learn text explaining a situation along with input data and output labels for the artificial intelligence function for training. Here, a second loss function used by the deep neural network is used along with the first loss function used by the artificial intelligence function for training. In order to train a deep neural network to explain a situation in the artificial intelligence system 100, training input for changing the weights constituting the network of the deep neural network is generated by taking output text of the deep neural network and desired text (not shown) as inputs, and using a result calculated using the second loss function.

Fig. 13 and Fig. 14 illustrate an example of a configuration for performing processing that generates an explanation in the processing sequence illustrated in Fig. 10, when it is necessary for the artificial intelligence system 100 to explain the reason for the behavior of the artificial intelligence function for training in the processing of verifying the output data of the artificial intelligence function for training, illustrated in Fig. 8.

Fig. 13 illustrates an example of a configuration corresponding to a case where the processing illustrated in Fig. 11 is performed as preparation when training an artificial intelligence function. By providing labels for the associative memory, a series of related data can be retrieved. The associative memory can associate multiple data with the same label using hash techniques. Therefore, by providing a label, first relevant data (such as an image) can be output. Alternatively, instead of using associative memory, the data can be distributed and stored on a network using blockchain technology.

Fig. 15 illustrates a pseudo-program expressing the processing illustrated in Fig. 13, which corresponds to a case where the method of explaining the reasons for the actions specified in the flowchart illustrated in Fig. 10 is a program. When this program is executed, data retrieved from associative memory in response to a display reading "one reason is the following data being input during training" is displayed in the display 106. A single piece of data may be displayed, or multiple pieces of data may be displayed at once. In the example illustrated in Fig. 15, the data is displayed one at a time, and the configuration is such that the next data is displayed when, in response to an output such as "is more data necessary?" (not shown), the user enters the equivalent of "Yes" (affirmative) through the touch panel, the keyboard, or by voice.

Additionally, Fig. 14 illustrates an example of a configuration corresponding to a case where the processing illustrated in Fig. 12 is performed as preparation when training an artificial intelligence function. By inputting the labels generated by the artificial intelligence function for execution into the deep neural network, text for a corresponding reason is output. In the example illustrated in Fig. 14, only the label is input to the deep neural network, but depending on the configuration of the deep neural network, the text may be generated by inputting both the label and the data to be input to the artificial intelligence function for execution. Additionally, rather than only text, related images may be displayed as well, as the output of the deep neural network.

Fig. 16 illustrates a pseudo-program expressing the processing illustrated in Fig. 14, which corresponds to a case where the method of explaining the reasons for the actions specified in the flowchart illustrated in Fig. 10 is artificial intelligence (e.g., a deep neural network). As a result of the deep neural network processing being executed by a processor (CPU 101) including the neural network accelerator, data is displayed in the display 106, and at the same time, text is reproduced by being output by voice using a speaker or the like, or by displaying text in the display 106.

The third example provides the specific effect of making it possible to make the behavior of applications that run artificial intelligence functions more transparent.

### [Example 4]

An example pertaining to a method for achieving fairness in an artificial intelligence function will be described next.

Fig. 17 illustrates a state transition diagram of the artificial intelligence function verification and creation software. It should be understood that the same state transitions can be incorporated into each of the examples described above as well.

The artificial intelligence function verification and creation software according to the present embodiment determines an execution state by transitioning among three modes, namely a "normal mode (normal)", a "verification mode (aware)", and an "explanation mode (explain)". The normal mode is a mode in which the artificial intelligence function verification and creation software does not perform verification, and the artificial intelligence system 100 uses only the artificial intelligence function. In other words, the artificial intelligence function verification and creation software performs virtually no special processing. In the verification mode, the artificial intelligence function verification and creation software performs verification. Additionally, in the explanation mode, in addition to the verification processing, the artificial intelligence function verification and creation software performs processing for providing explanations when anomalies are detected in the input data or the like through the verification. Under the verification mode, if an anomaly is detected, the artificial intelligence function verification and creation software may stop the operation of the entire artificial intelligence system 100.

Fig. 18 illustrates, in flowchart format, a processing sequence for the artificial intelligence function verification and creation software to eliminate the unfairness when modifying a trained model. The processing sequence illustrated here assumes that the artificial intelligence function verification and creation software transitions among the three modes described above.

First, a processing sequence performed in a training phase will be described with reference to Fig. 18. In the training phase, the artificial intelligence function verification and creation software trains the artificial intelligence function. The training of the artificial intelligence function is equivalent to "learning". The artificial intelligence function verification and creation software reads out training target data from a predetermined storage region, and furthermore retrieves label information (also called metadata) and the like associated with the training target data (step S1801). The label is identification information related to data, added by the provider of the data. For example, if the data is image data showing a cat and a person, each image data may be labeled as "cat", "person", or the like, or as "cat", "man", "one person", or the like. Labels are important data for training such as in deep learning. The reading out of the training target data and label information is assumed to be repeated until the training phase ends.

Next, the artificial intelligence function verification and creation software checks whether or not the training target data is unfair data (or potentially unfair data) on the basis of an artificial intelligence function verification and creation software label and the like (step S 1802). For example, the training target data is unfair data if the data shows bias or is fake data. Specifically, the unfairness of the training target data is checked against "unfairness verification criteria" read out from a predetermined storage region.

If it is determined that the training target data is not unfair data (or is not likely to be unfair data) (No in step S 1802), the artificial intelligence function verification and creation software transitions to the "normal mode", and after performing pre-processing such as format conversion on the data, the training target data is input to the artificial intelligence function for training, and training is performed (step S1804). A deep neural network and the like are used for the training. The artificial intelligence function verification and creation software then stores an updated artificial intelligence function model (generally, a set of weights of the nodes of the neural network) as a trained model in a predetermined storage region.

On the other hand, if it is determined that the training target data is unfair data (or may be unfair data) (Yes in step S 1802), the artificial intelligence function verification and creation software changes the mode from the "normal mode" to the "verification mode" (step S 1803). Then, the artificial intelligence function verification and creation software pre-processes the training target data in the verification mode, inputs the training target data to the artificial intelligence function for training, and performs the training (step S 1805). A deep neural network and the like are used for the training.

The pre-processing of the training target data performed in step S1805 includes correcting some of the data if the data is unfair in another processing flow, removing the data from being subject to input through filtering if correction is not possible, and the like. It is also possible to request the user to enter a processing policy through the GUI. In this case, the target data that may produce unfairness (images, audio data, text, and the like) may be displayed in the display and displayed so that the user can make a selection from a list of processing candidates ("modify", "delete", or "allow"), and the pre-processing of the training target data may proceed after waiting for the user to make an input (a selection through the touch panel, the keyboard, or the like, or a selection of an item in the list by voice).

Next, a processing sequence performed in a model verification phase will be described with reference to Fig. 19. In the model verification phase, the artificial intelligence function verification and creation software changes the mode from the "normal mode" to the "verification mode" (step S1810). Then, after setting the trained model to the target artificial intelligence function, the artificial intelligence function verification and creation software loads verification target data from a predetermined storage region and performs inference processing using the stated artificial intelligence function (step S1811). The artificial intelligence function verification and creation software repeats the processing of step S1811 for all the verification target data until the model verification phase ends.

Next, the artificial intelligence function verification and creation software performs a check to see if a state of unfairness has arisen on the basis of the labels generated by the stated artificial intelligence function as a result of inference (step S1812). For example, if a biased label is generated, or if there is an indication that fake data has been input, it is determined that a state of unfairness has arisen.

If no unfairness has arisen (No in step S1812), the artificial intelligence function verification and creation software returns to step S1811, reads out the next data, and continues the inference processing of the stated artificial intelligence function.

On the other hand, if unfairness has arisen (Yes in step S1812), the artificial intelligence function verification and creation software performs unfairness suppression processing (step S1813). For example, two methods can be given for the unfairness suppression processing: label storage processing and notification processing. In the former method, the artificial intelligence function verification and creation software stores the input data that resulted in labels having bias or labels indicating that data is fake data in a storage device along with the output labels for user verification as illustrated in Fig. 11 or Fig. 12, and then suppresses the output of the same labels. In the latter method, the artificial intelligence function verification and creation software displays in the display, or makes a notification through audio, that unfairness has arisen. In addition to this notification processing, the trained model can be retrained for the same input data.

After performing the unfairness suppression processing, the artificial intelligence function verification and creation software updates the model and performs the inference processing again on the same data using the trained model following the unfairness suppression (step S1814). Then, the artificial intelligence function verification and creation software checks whether the state of unfairness in the trained model has improved, i.e., that no unfairness has arisen occurred (step S1815).

If the state of unfairness in the trained model has improved (Yes in step S 1815), the artificial intelligence function verification and creation software returns to step S1811, reads out another instance of verification data, and continues the model verification.

On the other hand, if the state of unfairness in the trained model is confirmed again (No in step S1815), the artificial intelligence function verification and creation software performs other unfairness suppression processing (step S 1816). For example, the artificial intelligence function verification and creation software performs a training method different from the processing performed in step S1813. After this processing, the trained model is updated, and the sequence returns to the initial unfairness suppression processing (step S 1813).

In this example, it is necessary to recognize the state of unfairness. For example, when an artificial intelligence function has a function for generating related images according to a predetermined image or label, and when there is unfairness in the image data generated by the artificial intelligence function, a generative adversarial network (GAN) can be used as a method to detect that unfairness.

Fig. 20 illustrates a mechanism for recognizing unfairness in the output data of an artificial intelligence function using a generative adversarial network. A generative network that generates an arbitrary unfair image (an image having bias or that is not real in response to a predetermined label input) in response to the input of a randomly generated vector (that is, an unfair image generation network) 2001, and a differentiation network 2002 that takes a normal image as an input and determines the authenticity of the image, are used in the generative adversarial network illustrated here.

By training the unfair image generation network 2001 and the differentiation network 2002 with staggered exclusive times but while operating mutually, the differentiation network 2002 can be made to determine whether or not an input image is unfair. On the other hand, the unfair image generation network 2001 learns, to the greatest extent possible, to output images that the differentiation network 2002 has determined to be unfair or false.

If a label generated by the differentiation network 2002 exceeds a certain value, the image can be determined to be unfair (biased or a fake image). Therefore, the differentiation network 2002 can be used for processing of recognizing states of unfairness in the flowchart illustrated in Fig. 18.

Fig. 21 is a diagram illustrating an example of a system configuration used during training of the generative adversarial network illustrated in Fig. 20.

The unfair image generation network 2002 generates image data by inputting vectors generated at random. Here, the image output by the unfair image generation network 2001 is image data that should be determined to be unfair by the differentiation network 2002.

The image data output by the unfair image generation network 2001 is input to the differentiation network 2002, and the output label is verified. The output label is a real number between 0 and 1, and is determined to be "false" when close to 0 and "true" when close to 1. In this situation, because the purpose is to train the unfair image generation network 2001, training gradient calculation is performed on the basis of the output label indicating the authenticity and the data which has been generated. As an example, if the output label is greater than a constant value (e.g., 0.5), the differentiation network 2002 is determined to have been successfully fooled, and training is performed by modifying the weights of the nodes in the deep neural network constituting the unfair image generation network 2001 through back-propagation so that the output image is more likely to be output in the future.

On the other hand, in the training of the differentiation network 2002, the training gradient is calculated such that the output label is a value close to 1 when correct data is input and the output label is a value close to 0 when the data output by the unfair image generation network 2001 is input, and the training is performed by modifying the weights of the nodes in the deep neural network constituting the differentiation network 2002 through back-propagation.

The fourth example has the specific effect that, based on the recognition of unfairness in the output of the artificial intelligence function, it is possible to make the artificial intelligence function fairer by retraining the artificial intelligence function to improve the state of unfairness.

### [Example 5]

An example of providing an explanation that the behavior of an artificial intelligence function is in compliance with a selected guideline for verification will be described next.

As mentioned above, in order to achieve accountability, which is one of the basic functions of the artificial intelligence function proposed in the present specification, rules, policies, guidelines, and specifications are clearly defined as criteria for verifying a device having the target artificial intelligence function, in a form that can be visually recognized from the outside through the user interface of the artificial intelligence system 100.

Fig. 22 illustrates an example of guidelines (criteria) and selectable rules. By presenting a guideline at the top level of the GUI, the user can confirm the content of the guideline by reading out the content through a touch motion on the touch panel or the like.

The predicted behavior of the artificial intelligence system 100 with respect to the guidelines is a checklist as to whether or not the artificial intelligence system 100, which has been created according to the guidelines, is operating correctly according to the guidelines. By performing verification through the verification mode among the modes illustrated in Fig. 17 having selected a behavior item on the basis of the checklist, it is possible to confirm whether or not the artificial intelligence system is operating according to the guidelines.

Product-specific rules may be used as verification criteria in any of the aforementioned examples, and the criteria may be capable of being selected by selecting a product. It may also be made possible to change or combine some of the rules as desired.

Fig. 23 illustrates a data structure in a storage region as another example of guidelines (criteria) and selectable rules. Apart from the guidelines, checklists are stored for each product and function (for facial recognition, financial loans, human resources, and the like).

Furthermore, the model (e.g., the set of weights of the nodes in the deep neural network, labels, and the like) and the data set that are the subjects of the checklist are stored in association with the checklist.

Additionally, the configuration is such that an application having a corresponding artificial intelligence function can be referenced from each model, or specific data can be referenced from each data set.

Fig. 24 illustrates a mechanism for automatically generating an executable checklist from guidelines. This drawing illustrates how various checklists (e.g., for facial recognition or the like) are created by specifying a product category, a use purpose, and the like for guidelines described as natural language text, and furthermore how the checklists divided into model checklists and data checklists.

Fig. 25 illustrates a checklist (criteria) generated from guidelines. This drawing illustrates how a model checklist is applied to check a model, where the model is output as a checked model if the model is appropriate according to the criteria, and how each data is verified using a data checklist, where the data is output as checked data if the data is appropriate according to the criteria.

Fig. 26 illustrates an example of a checklist template data structure for the model and the data. In this checklist, an item and constraint conditions thereof are indicated for each item to be checked. The checklist includes the following items: "product and use area designation", "minimum specification definition", and "scope of application".

The item "product and use area limitation" indicates whether "product" and "use area limitation" are mandatory items or optional as constraint conditions. The configuration is such that when "product and use area limitation" is a mandatory item, "product" and "use area" sub-items are further designated. The product category is set in the "product" sub-item. For example, "facial recognition", "financial loans", "human resources", and the like can be entered as desired, or by selecting items, via the GUI, as the product category. "Country name", "region name", and the like can be entered as desired, or by selecting items, via the GUI, as the "use area" sub-item. If the item "product and use area limitation" is optional, the data of the sub-item can be omitted.

The item "minimum specification definition" indicates the priorities which "fairness", "explainability", "performance", and the like can take on, and includes "fairness", "explainability", and "performance" as sub-items. In order of priority, the constraint conditions of ("fairness" > "performance") and ("explainability" > "performance") can be described so that actions can be verified in accordance with these conditions. In each sub-item, it is also possible to specify a range that each data value can take, or only a threshold.

For each of the sub-items, for example, stating a constraint condition of "fairness" > 0.5 makes it possible to indicate that it is necessary for fairness to be kept above 0.5 in the data statistics.

The constraint conditions for the item "scope of application" are "model", "data", and "common". In other words, constraint conditions are indicated as to whether this checklist template is applied only to the "model", only to the "data", or both "in common". "Scope of application" being set to "data" means that this checklist template is applied to the "data" to be input/output.

The fifth example has the specific effect of making it possible for different criteria to be generated for each application as needed from a common guideline template.

### [Example 6]

An example of guideline conformance verification in the cloud will be described next.

It is not necessary to perform all conformance verification of the guidelines on a single device. For example, if some of the guidelines are defined as international standards, the conformance of the guidelines may be checked in a uniform manner by a common infrastructure. In such cases, common guideline conformance can be made to be executed in the infrastructure in the cloud. On the other hand, even in such a case, it is desirable to have a method for keeping data that depends on the structure and data of each product outside to the greatest extent possible.

Fig. 27 illustrates a system that achieves verification of guideline conformance in such cases by providing a common API, converting the data into items defined in a standard specification, and exchanging the data.

In the example of the system configuration illustrated in Fig. 27, guideline conformance verification is accomplished in a situation where a server in the cloud and a client application in which multiple artificial intelligence function verification and creation software are installed are connected through a wired or wireless network (not shown) via an API. The API can be indicated for both directions: access from the client side to the server, or access from the server to the client.

Fig. 28 illustrates an example of an API used between a server in the cloud and a client application, in the system illustrated in Fig. 27.

### APIs for requests from client to server:

(1) Request: this is an API for sending a model or data as a set or as a single entity specified by a predetermined identifier (ID, e.g., a URI or the like) to a server and requesting that the data be checked for whether or not the data conform to a standard specification. "Model" or "data", "set" or "single", and "identifier (ID)" are specified as arguments.
(2) Response: this is an API for notifying the client that is a source of a request of a check result from the server. "Authenticated" or "not-authenticated", which indicate the response, and the identifier (ID) of the model or data in question, are returned as arguments.

Although "conforming to a standard specification" is used here, an API can also be provided to check whether an item "conforms to predetermined criteria". In this case, it is sufficient to specify predetermined "criteria" in one of the arguments in the Request.

### APIs for requests from server to client:

(1) Diag: this is an API that requests the server to send, to the client, the "input data" or the "output data" for an artificial intelligence function (a model) of the client, in a set period and at a set sampling rate, so that the server can be checked for conformance with a standard specification. "Input" or "output", "sampling rate", and "(monitoring) period" are specified as arguments.
(2) Model_output: this is an API for sending predetermined data to the server when "output" is specified in response to a Diag request. The data and the identifier (ID) are specified as arguments.
(3) Model_input: this is an API for sending predetermined data to the server when "input" is specified in response to a Diag request. The data and the identifier (ID) are specified as arguments.
(4) Status: this is an API through which the server sends, to the application, after checking the data, whether the data specified by the ID has been determined to be "authenticated" or "not-authenticated".

Although "conforming to a standard specification" is used here, an API can also be provided to check whether an item "conforms to predetermined criteria". In this case, it is sufficient to specify predetermined "criteria" in one of the arguments in the Model_output or the Model_input.

The sixth example has the specific effect that when different organizations have different guidelines in place, sharing the guidelines to be followed through the cloud makes it possible to confirm that the guidelines for each organization comply with international standards, for example, which in turn enables appropriate verification of artificial intelligence functions.

Finally, the effects provided by the artificial intelligence function verification and creation techniques introduced in each of the foregoing examples will be summarized.

According to the artificial intelligence function verification and creation technique, the three basic functions of artificial intelligence functions, namely "accountability", "fairness", and "transparency", can be verified, and a device having an artificial intelligence function which guarantees these basic functions can be manufactured.

First, according to the artificial intelligence function verification and creation technique, a plurality of criteria are provided for verifying the device having the target artificial intelligence function, and any of the criteria can be selected by the user. Then, when the device having the target artificial intelligence function is trained on the basis of input data, or when a predetermined input is provided to the device having the target artificial intelligence function using a trained model, the criteria for verifying whether or not the output is appropriate in light of the predetermined criteria can be manipulated as a function. The artificial intelligence function verification and creation technique can therefore ensure accountability.

Second, according to the artificial intelligence function verification and creation technique, the fairness of the input data for training (e.g., that the data is unbiased and not fake) can be verified, and inappropriate data can be corrected or filtered as necessary, such that the device having the target artificial intelligence function can generate appropriate output on the basis of predetermined specifications. The artificial intelligence function verification and creation technique can therefore ensure fairness.

Third, according to the artificial intelligence function verification and creation technique, when the output of a device having the target artificial intelligence function is not considered appropriate in light of the predetermined specifications, the relationship between the input and output can be identified, or the relationship between the trained model that generated the output and the input used during training can be identified. The artificial intelligence function verification and creation technique can therefore ensure transparency.

In sum, according to the artificial intelligence function verification and creation technique, at the time of development or use of a device having the target artificial intelligence function, in light of predetermined specifications, the artificial intelligence function can be verified in order to perform appropriate processing on the basis of appropriate input, or for the device having the target artificial intelligence function to generate appropriate output, and the artificial intelligence function can be trained through the verification processing. According to the artificial intelligence function verification and creation technique, it is possible to manufacture a device having a highly-reliable and valuable artificial intelligence function, from the perspective of accountability, fairness, and transparency.

### [Industrial Applicability]

The techniques disclosed in the present specification has been described in detail with reference to specific embodiments. However, it will be apparent to those skilled in the art that modifications and substitutions can be made in the embodiment without departing from the essential spirit of the techniques disclosed in the present specification.

The technology disclosed in the present specification can be applied to the verification of devices having artificial intelligence functions, and the creation of computer programs used in such devices, which are applied in various fields, including image recognition in cameras, image composition in televisions, voice recognition in headphones, and the like; natural language understanding and document composition in document processing systems; behavior recognition and behavior generation in agents and robots; and the like.

To sum up, the technology disclosed in the present specification has been described in the form of examples, and the content of the present specification should not be interpreted as being limited. The scope of patent claims should be considered in order to determine the essential spirit of the technique disclosed in the present specification.

Meanwhile, the technique disclosed in the present specification can also be configured as follows.

(1) An artificial intelligence device, including: an input data obtaining unit that obtains input data for an artificial intelligence function from a predetermined storage device; an input data verifying unit that verifies the obtained input data on the basis of a predetermined criterion; a data input unit that inputs input data satisfying the criterion into the artificial intelligence function; and a presenting unit that presents input data not satisfying the criterion and a criterion violated by the input data.
(2) The artificial intelligence device according to (1), further including: a processing unit that performs processing when the input data does not satisfy the criterion.
(2-1) The artificial intelligence device according to (2), wherein the processing unit executes at least one of removing data not satisfying the criterion from the storage device or saving the data not satisfying the criterion in a storage device different from the storage device.
(3) The artificial intelligence device according to one of (1) and (2), further including: a selecting unit that selects the criterion.
(4) The artificial intelligence device according to (3), wherein the criterion includes at least one of a rule, a policy, a guideline, and a specification.
(5) The artificial intelligence device according to (3), wherein the criterion includes at least one of a restriction on a purpose for which the artificial intelligence function operates, a restriction on a target user, region, or the like, and a field in which the artificial intelligence function is applied.
(6) The artificial intelligence device according to any one of (1) to (5), further including: an output data obtaining unit that obtains output data from the artificial intelligence function; and an output data verifying unit that verifies the obtained output data on the basis of a predetermined output criterion.
(7) The artificial intelligence device according to (6), wherein the output data verifying unit verifies the output data on the basis of the output criterion that verifies fairness.
(8) The artificial intelligence device according to (6) or (7), further including a selecting unit that selects the output criterion.
(9) The artificial intelligence device according to any one of (6) to (8), further including a control unit that controls behavior of the artificial intelligence function when the output data does not satisfy the output criterion.
(9-1) The artificial intelligence device according to (9), wherein the control unit stops some or all of functions of the artificial intelligence function when the output data does not satisfy the output criterion.
(9-2) The artificial intelligence device according to (9), wherein the control unit continues data input to the artificial intelligence function when the output data satisfies the output criterion.
(10) The artificial intelligence device according to any one of (6) to (9), wherein the presenting unit further presents output data that does not satisfy the output criterion and an output criterion violated by the output data.
(11) The artificial intelligence device according to any one of (6) to (10), wherein when the output data does not satisfy the output criterion, the output data verifying unit further verifies whether or not the output data is within a normal range and the behavior of the artificial intelligence function is valid.
(11-1) The artificial intelligence device according to (11), wherein when the output data is not normal or behavior of the artificial intelligence function is not valid, the presenting unit further presents the output data that does not satisfy the output criterion and the output criterion violated by the output data.
(12) The artificial intelligence device according to any one of (6) to (10), further including a providing unit that provides an explanation regarding a reason for the behavior of the artificial intelligence function when the output data does not satisfy the output criterion.
(13) The artificial intelligence device according to any one of (1) to (12), wherein output data of the artificial intelligence function is stored in an output data storage device.
(14) The artificial intelligence device according to (13), wherein the output data storage device stores the output data of the artificial intelligence function on the basis of blockchain technology.
(15) The artificial intelligence device according to any one of (1) to (14), including an application programming interface that commands a device different from the artificial intelligence device to verify the input data for the artificial intelligence function or output data from the artificial intelligence function.
(16) The artificial intelligence device according to (15), wherein the device runs in the cloud.
(17) The artificial intelligence device according to any one of (1) to (16), wherein the artificial intelligence function trains the input data or generates data based on the input data.
(18) The artificial intelligence device according to (17), wherein the training is performed through deep learning.
(19) The artificial intelligence device according to any one of (1) to (18), wherein the artificial intelligence function includes a neural network.
(20) A program creation method that creates a computer program including an artificial intelligence function trained by training the artificial intelligence function, the method including: obtaining input data for an artificial intelligence function from a predetermined storage device; verifying the obtained input data on the basis of a predetermined criterion; inputting input data satisfying the criterion into the artificial intelligence function; and presenting input data not satisfying the criterion and a criterion violated by the input data.

### [Reference Signs List]

- 100: Artificial intelligence system
- 101: CPU
- 102: Virtual storage device
- 103: Bus
- 104: Camera
- 105: Microphone
- 106: Display
- 107: Speaker
- 108: Sensor group
- 109: Actuator group
- 110: Communication unit

## Claims

1. An artificial intelligence device, comprising:
an input data obtaining unit that obtains input data for an artificial intelligence function from a predetermined storage device;
an input data verifying unit that verifies the obtained input data on the basis of a predetermined criterion;
a data input unit that inputs input data satisfying the criterion into the artificial intelligence function; and
a presenting unit that presents input data not satisfying the criterion and a criterion violated by the input data.

2. The artificial intelligence device according to claim 1, further comprising:
a processing unit that performs processing when the input data does not satisfy the criterion.

3. The artificial intelligence device according to claim 1, further comprising:
a selecting unit that selects the criterion.

4. The artificial intelligence device according to claim 3,
wherein the criterion includes at least one of a rule, a policy, a guideline, and a specification.

5. The artificial intelligence device according to claim 3,
wherein the criterion includes at least one of a restriction on a purpose for which the artificial intelligence function operates, a restriction on a target user, region, or the like, and a field in which the artificial intelligence function is applied.

6. The artificial intelligence device according to claim 1, further comprising:
an output data obtaining unit that obtains output data from the artificial intelligence function; and
an output data verifying unit that verifies the obtained output data on the basis of a predetermined output criterion.

7. The artificial intelligence device according to claim 6,
wherein the output data verifying unit verifies the output data on the basis of the output criterion that verifies fairness.

8. The artificial intelligence device according to claim 6, further comprising:
a selecting unit that selects the output criterion.

9. The artificial intelligence device according to claim 6, further comprising:
a control unit that controls behavior of the artificial intelligence function when the output data does not satisfy the output criterion.

10. The artificial intelligence device according to claim 6,
wherein the presenting unit further presents output data that does not satisfy the output criterion and an output criterion violated by the output data.

11. The artificial intelligence device according to claim 6,
wherein when the output data does not satisfy the output criterion, the output data verifying unit further verifies whether or not the output data is within a normal range and the behavior of the artificial intelligence function is valid.

12. The artificial intelligence device according to claim 6, further comprising:
a providing unit that provides an explanation regarding a reason for the behavior of the artificial intelligence function when the output data does not satisfy the output criterion.

13. The artificial intelligence device according to claim 1,
wherein output data of the artificial intelligence function is stored in an output data storage device.

14. The artificial intelligence device according to claim 13,
wherein the output data storage device stores the output data of the artificial intelligence function on the basis of blockchain technology.

15. The artificial intelligence device according to claim 1, comprising:
an application programming interface that commands a device different from the artificial intelligence device to verify the input data for the artificial intelligence function or output data from the artificial intelligence function.

16. The artificial intelligence device according to claim 15,
wherein the device runs in the cloud.

17. The artificial intelligence device according to claim 1,
wherein the artificial intelligence function trains the input data or generates data based on the input data.

18. The artificial intelligence device according to claim 17,
wherein the training is performed through deep learning.

19. The artificial intelligence device according to claim 1,
wherein the artificial intelligence function includes a neural network.

20. A program creation method that creates a computer program including an artificial intelligence function trained by training the artificial intelligence function, the method comprising:
obtaining input data for an artificial intelligence function from a predetermined storage device;
verifying the obtained input data on the basis of a predetermined criterion;
inputting input data satisfying the criterion into the artificial intelligence function; and
presenting input data not satisfying the criterion and a criterion violated by the input data.
